# EUROPEAN PATENT SPECIFICATION

(11) **EP 2 772 297 B1**
(45) Date of publication and mention of the grant of the patent: **03.06.2020**
(21) Application number: 12843840.5
(22) Date of filing: 09.10.2012
(51) Int. Cl.: B01D 53/14, B01D 53/62

(54) **CARBON DIOXIDE RECOVERY METHOD AND USE OF RECOVERY DEVICE**
KOHLENDIOXID-RÜCKGEWINNUNGSVERFAHREN UND VERWENDUNG EINER RÜCKGEWINNUNGSVORRICHTUNG
PROCÉDÉ DE RÉCUPÉRATION DE DIOXYDE DE CARBONE ET UTILISATION D'UN DISPOSITIF DE RÉCUPÉRATION

(30) Priority: 28.10.2011 JP 2011236829
(43) Date of publication of application: 03.09.2014
(73) Proprietor: IHI Corporation, Tokyo 135-8710 (JP)
(72) Inventor: NAKAMURA, Shiko, Tokyo 135-8710 (JP); YAMANAKA, Yasuro, Tokyo 135-8710 (JP); OKUNO, Shinya, Tokyo 135-8710 (JP)
(74) Representative: Lamb, Martin John Carstairs
(86) International application number: PCT/JP2012/076073
(87) International publication number: WO 2013/061761

(56) References cited:
- EP-A1- 2 269 712
- JP-A- S5 667 525
- JP-A- 2005 254 212
- JP-B1- S4 418 728
- US-A- 3 685 960
- US-A- 3 773 895
- US-A- 4 367 258
- US-A1- 2010 170 396

## Description

### Technical Field

The present invention relates to a method of recovering carbon dioxide and the use of a recovery apparatus of carbon dioxide to return a clean gas into the air by separating and recovering carbon dioxide from a gas containing carbon dioxide such as a combustion gas.

### Background Art

A large amount of fuel such as coal, heavy oil and extra heavy oil is used in facilities such as thermal power stations, ironworks and boilers. In regard to sulfur oxide, nitrogen oxide and carbon dioxide discharged by burning of the fuel, quantitative/concentration restriction on emissions has been required from the viewpoint of prevention of air pollution and global environmental protection. In recent years, carbon dioxide has been viewed as a problem as is a major contributor to global warming, and moves to suppress carbon dioxide emissions have been active worldwide. Therefore, various kinds of research have been vigorously conducted in order to enable recovery/storage of carbon dioxide from a combustion exhaust gas or a process exhaust gas instead of emitting carbon dioxide in the air. For example, a PSA (pressure swing adsorption) method, a membrane separation concentration method, and a chemical absorption technique using reaction absorption with a basic compound have been known as a method of recovering carbon dioxide.

In the chemical absorption technique, a basic compound that typically belongs to alkanolamines is mainly used as an absorbent, and the absorbing liquid is circulated in the treatment process thereof, generally, with use of an aqueous solution containing the absorbent as the absorbing liquid, by alternately repeating an absorption step of causing the absorbing liquid to absorb carbon dioxide contained in the gas and a regeneration step of regenerating the absorbing liquid by causing the absorbing liquid to release the absorbed carbon dioxide (see, for example, Patent citation 1 described below). Heating for the release of carbon dioxide is needed in the regeneration step, and it becomes important to reduce energy required for heating/cooling for the regeneration, in order to reduce the operation cost of carbon dioxide recovery.

As disclosed in Patent Literature 1, a high-temperature absorbing liquid from which carbon dioxide has been discharged (lean solution) in the regenerating step is subjected to heat exchange with an absorbing liquid in which carbon dioxide has been absorbed (rich solution) in the absorbing step. In this way, thermal energy is possibly recovered to reuse in the regenerating step.

In order to reduce the energy required for recovering carbon dioxide from the absorbing liquid, according to Patent Literature 2 listed below, the following is used for heating the absorbing liquid: residual heat of steam-condensed water generated from a regenerating heater for pulling out the absorbing liquid in the regenerating step and then subjecting the absorbing liquid to heat exchange with high-temperature steam. Furthermore, Patent Literature 3 listed below states that, in order to promote the discharge of absorbed carbon dioxide, a stripping gas is introduced to be accompanied with carbon dioxide.

### Citation List

### Patent literatures

Patent Literature 1: JP 2009-214089 A
Patent Literature 2: JP 2005-254212 A
Patent Literature 3: JP 2005-230808 A

Further absorber-regeneration systems are disclosed in US4367258, JP44-18728B1,US3773895 and US3685960.

### Summary of Invention

### Technical Problem

Energy required for the regenerating step is classified into sensible heat required for a rise in the temperature of an absorbing liquid, reaction heat generated when carbon dioxide is discharged from the absorbing liquid, and latent heat compensating for heat loss based on vaporization of water from the absorbing liquid. However, the above-mentioned precedent techniques are techniques related to the sensible heat or reaction heat, and energy concerned with the latent heat is discharged together with water vapor contained in the collected carbon dioxide. Consequently, there has still remained a room for improving the efficiency of the energy.

In order to spread the recovering of carbon dioxide for environment preservation, it is desired from an economical viewpoint to make the energy efficiency as high as possible to reduce costs for the recovery. It is important for energy saving to heighten the efficiency of recovering thermal energy from an absorbing liquid. This can also act effectively onto the efficiency of recovering carbon dioxide.

An object of the present invention is to solve the above-mentioned problems to provide a carbon dioxide recovery method and use of a recovery apparatus capable of reducing energy required for regenerating the absorbing liquid to decrease operating costs.

Another object of the present invention is to provide a carbon dioxide recovery method and use of a recovery apparatus capable of decreasing burdens onto the apparatus and the absorbing liquid and reducing energy required for regenerating the absorbing liquid without lowering the recovery ratio of carbon dioxide, thereby decreasing costs for collecting carbon dioxide.

### Technical Solution

In order to solve the problems, the inventors have repeated eager researches to find out that the absorbing liquid is circulated by use of a two-part-divided circulation system in which each of the absorbing step and the regenerating step is divided into at least two stages, thereby carrying out two groups of a carbon-dioxide-absorbing/recovering cycle. Thus, the present invention has been achieved.

According to a first aspect of the invention the use of an absorption and regeneration column is defined in claim 1.

According to another aspect of the present invention, a method is defined in claim 7.

### Advantageous Effects

According to the present invention, in the process of recovering carbon dioxide contained in the gas, an improvement is made in the efficiency of recovering heat used for regenerating the absorbing liquid, so that thermal energy required for the regeneration is possibly reduced without lowering the recovery ratio of carbon dioxide. Thus, the provided carbon dioxide recovery method and use of a recovery apparatus are useful for reducing driving costs. Two absorbing liquids each comprising the same aminealkanols or hindered amines having an alcoholic hydroxyl group in different concentrations from each other in composition are usable, and respective properties of the absorbing liquids can be specialized correspondingly to the respective absorbing/regenerating conditions of the absorbing liquids. Using their properties, the recovery of carbon dioxide and the regeneration of the absorbing liquids can be efficiently attained, so that loads onto the absorbing liquids are reduced when the absorbing liquids are regenerated. Thus, the absorbing liquids can be efficiently and stably used, and it is useful for decreasing operating costs and facility-maintaining costs. Since the present invention can easily be performed using ordinary facilities without requiring special equipment or expensive apparatus, it is economically favorable.

### Brief Description of the Drawings

Fig. 1 is a schematic configuration diagram showing an embodiment of the carbon dioxide recovery apparatus for a use thereof according to the present invention.
Fig. 2 is a schematic configuration diagram showing another embodiment of the carbon dioxide recovery apparatus for a use thereof according to the present invention.

### Mode for Carrying Out the Invention

In an absorption process of carbon dioxide according to the chemical absorption method, an absorption treatment in which an absorbing liquid at low temperature is caused to absorb carbon dioxide contained in a gas and a regeneration treatment in which the absorbing liquid is regenerated by causing the absorbing liquid to release the absorbed carbon dioxide are alternately repeated by circulating the absorbing liquid between the absorption treatment and the regeneration treatment. The regeneration degree of the absorbing liquid in the regeneration treatment depends on the heating temperature of the absorbing liquid. As the temperature is higher, the absorbing liquid discharges a larger volume of carbon dioxide so that the remaining carbon dioxide concentration in the absorbing liquid becomes lower (see: Jong I. Lee, Federick D. Otto and Alan E. Mather, "Equilibrium Between Carbon Dioxide and Aqueous Monoethanolamine Solutions", J. appl. Chem. Biotechnol. 1976, 26, pp. 541-549). Thus, the absorbing liquid in the regeneration treatment is kept at a temperature near to the boiling point thereof by an external heating implement using thermal energy supplied from an external heat source. The absorbing liquid from which carbon dioxide has been discharged (lean solution) in the regeneration treatment, which is high in temperature, is subjected to heat exchange with the absorbing liquid in which carbon dioxide has been absorbed (rich solution) in the absorption treatment, and the heated rich solution is supplied to the regeneration treatment. Thus, thermal energy is recovered and reused. However, carbon-dioxide-containing gas discharged from the absorbing liquid in the regeneration treatment is discharged in a high-temperature state that the gas contains the heat. The heat quantity contained in the discharged gas is wasted. The temperature of the discharged gas, that is, the column-top temperature of the regeneration column can be made low by lowering the heat exchange ratio between the rich solution and the lean solution. However, it does not contribute to a reduction in the heat quantity because sensible heat recovered in the heat exchange is reduced.

In the present invention, each of an absorption treatment and a regeneration treatment is divided into at least two stages, so as to constitute two groups of an absorbing step and a regenerating step. The circulating path for circulating the absorbing liquid is also separated into two independent paths, and the absorbing liquid is circulated between the absorbing step and the regenerating step in each of the groups to constitute the recovery method of the present invention. In one of the regenerating steps, the absorbing liquid is positively heated by an external heating implement using an external energy source, and a high-temperature gas discharged in this step is supplied to the other regenerating step to function as a heat source, whereby the absorbing liquid is heated and regenerated. In short, heat discharged and recovered from the gas is directly used to regenerate the absorbing liquid. In this configuration, the absorbing liquid that is circulated in the two paths can be separately selected for each path so that each of the absorbing liquids can be adjusted to have a property suitable for treatment conditions in the path concerned. It is generally difficult for the absorbent contained in the absorbing liquid to develop such an absorbent as to be excellent in both of absorption performance and regeneration property, and general absorbents are excellent in either one of the above two items. Thus, according to the structure in which absorbing liquids of the same alkanolamine or hindered amines with an alcoholic hydroxyl group different from each other in concentration are usable, an absorbing liquid specialized for treatment conditions in the absorbing step and the regenerating step is possibly selected to use for each circulation system, so that a decrease can be favorably advanced in energy required for the regeneration while a lowering in the efficiency of the absorption and that of the regeneration is avoided.

Hereinafter, referring to the drawings, a detailed description will be made about the carbon dioxide recovery method and carbon dioxide recovery apparatus of the present invention.

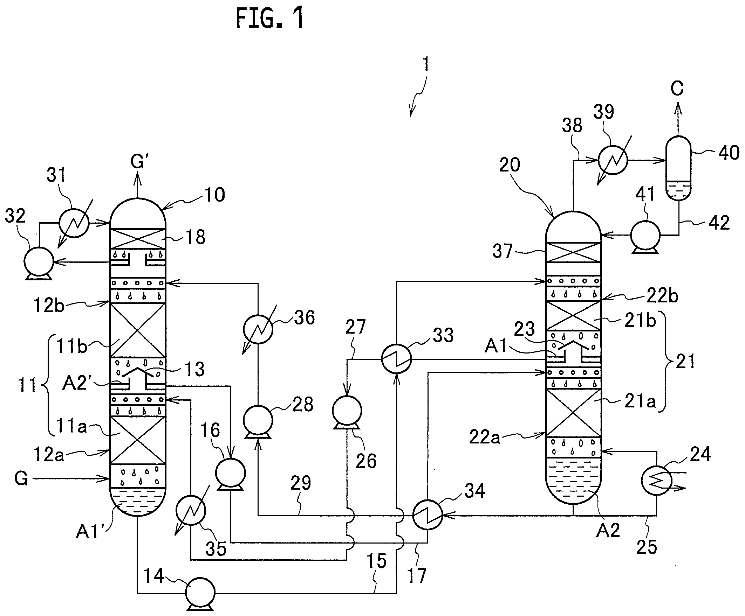

Fig. 1 illustrates an embodiment of the carbon dioxide recovery apparatus of the invention. A recovery apparatus 1 has an absorption column 10 configured to bring a gas G containing carbon dioxide into contact with an absorbing liquid to cause carbon dioxide to be absorbed into the absorbing liquid, and a regeneration column 20 which is configured to heat the absorbing liquid in which carbon dioxide is absorbed, to discharge carbon dioxide from the absorbing liquid and regenerate the absorbing liquid. The gas G supplied to the recovery apparatus 1 is not particularly limited and thus, various carbon-dioxide-containing gases, such as combustion exhaust gas and a process exhaust gas, can be handled. The absorption column 10 and the regeneration column 20 are each configured as a gas-liquid contact equipment of a countercurrent type, and are filled with fillers 11 and 21, respectively, for increasing their contact areas. The absorbing liquid used therein is an aqueous liquid containing, as an absorbent, an al kanolamine or a hindered amine having an alcoholic hydroxyl group. The fillers 11 and 21 are made of a material having endurance and corrosion resistance at the treatment temperatures and may be appropriately selected to be used, respectively, from fillers having a shape capable of providing a desired contact area. In general, fillers made of an iron-based metal material, such as stainless steel or carbon steel, may be used for these fillers, but the fillers are not limited thereto. If necessary, a cooling column may be provided for keeping the gas G to be supplied into the absorption column 10 at a low temperature suitable for the absorption of carbon dioxide.

The gas G containing carbon dioxide is supplied through a lower portion of the absorption column 10. The inside of the absorption column 10 is partitioned into a first absorbing section 12a at the lower side in which a filler 11a is held, and a second absorbing section 12b at the upper side in which a filler 11b is held. Between the first and second absorbing sections 12a and 12b, a partitioning member 13 is interposed such that a cylindrical wall stands on the circumferential edge of a central hole formed in a horizontal circular plate, and a lamp-shade-like member covers over the upper end hole of the cylindrical wall of the partitioning member 13, and it is configured so that a liquid reservoir is formed on the horizontal circular plate between the inner wall of the absorption column 10 and the cylindrical wall of the partitioning member 13. The gas G supplied through the lower portion of the absorption column 10 rises in the column to pass through the filler 11a in the first absorbing section 12a, and then passes through the inner bore of the cylindrical wall of the partitioning member 13 to pass through the filler 11b in the second absorbing section 12b. The absorbing liquid is separated into first and second absorbing liquids. The first absorbing liquid is supplied through an upper portion of the first absorbing section 12a of the absorption column 10 to flow down through the filler 11a, and then stored on the absorption column bottom portion 10. The second absorbing liquid is supplied through an upper portion of the second absorbing section 12b of the absorption column 10 to flow down through the filler 11b, and then stored in the liquid reservoir of the partitioning member 13. It is configured to discharge the second absorbing liquid to the outside of the column without flowing down to the first absorbing section. While the gas G passes through the fillers 11a and 11b, the gas is brought into gas-liquid contact with the two absorbing liquids successively, so that carbon dioxide in the gas G is absorbed into the absorbing liquids. Since the gas after passing through the first absorbing section has been lowered in carbon dioxide concentration, the second absorbing liquid contacts a gas lower in carbon dioxide concentration than the gas G which the first absorbing liquid contacts. The first absorbing liquid A1' in which carbon dioxide has been absorbed (rich solution) in the first absorbing section 12a is stored on the bottom of the absorption column 10 and then supplied, by means of a pump 14, to the regeneration column 20 through a first supplying path 15 through which the bottom of the absorption column 10 is connected to an upper portion of the regeneration column 20. The second absorbing liquid A2' in which carbon dioxide has been absorbed (rich solution) in the second absorbing section 12b is stored in the liquid reservoir of the partitioning member 13 and then supplied, by means of a pump 16, to the regeneration column 20 through a second supplying path 17 through which the center portion of the absorption column 10 is connected to the center portion of the regeneration column 20. The gas G' from which carbon dioxide has been removed is discharged from the absorption column 10 through the top thereof.

When the absorbing liquid absorbs carbon dioxide, heat is generated so that the temperature of the liquid is raised. Thus, as the need arises, a cooling condenser section 18 is provided at the top of the absorption column 10 to condense water vapor and others contained in the gas G'. This section enables to restrain the water vapor and the others to some degree from leaking outside the column. In order to further ensure the restraint, the recovery apparatus has a cooler 31 and a pump 32 located outside the absorption column. A part of condensed water stored under the cooling condenser section 18 (the condensed water part being permissible to contain the gas G' in the column) is circulated between the cooling condenser section 18 and the cooler 31 by means of the pump 32. The condensed water and others that have been cooled by the cooler 31 to be supplied to the column top portion cause the cooling condenser section 18 to be kept at a low temperature, and causes the gas G' passing through the cooling condenser section 18 to be certainly cooled. The driving of the pump 32 is controlled in such a manner that the temperature of the gas G' discharged outside the column is preferably about 60°C or lower, more preferably 45°C or lower. In the structure in Fig. 1, water condensed in the cooling condenser section 18 is supplied to the filler 11b. Since the condensed water is usable to correct a fluctuation in the composition of the absorbing liquid in the columns, it is thus allowable, as the need arises, that the respective concentration compositions of the first and second absorbing liquids are detected and the condensed water is distributed so as to be supplied to the filler 11a and/or filler 11b in accordance with the ratio of the fluctuations in the concentration. Considering correction with use of condensed water in the regeneration column 20, which will be detailed later, it is generally appropriate that the condensed water in the absorption column 10 is added to the second absorbing liquid.

The inside of the regeneration column 20 is partitioned into a first regenerating section 22a at the lower side in which a filler 21a is held, and a second regenerating section 22b at the upper side in which a filler 12b is held. Between the first and second regenerating sections 22a and 22b, a partitioning member 23 is interposed which has the same structure as the partitioning member 13 to form a liquid reservoir. The first absorbing liquid A1' supplied from the bottom of the absorption column 10 through the first supplying path 15 is introduced to the upper portion of the second regenerating section 22b of the regeneration column 20 to flow down through the filler 21b, and then stored in the liquid reservoir of the partitioning member 23. It is configured that the first absorbing liquid part A1' is discharged to the outside of the column without flowing down to the first regenerating section. The second absorbing liquid A2' supplied from the second absorbing section 12b of the absorption column 10 through the second supplying path 17 is supplied to the upper portion of the first regenerating section 22a to flow down through the filler 21a, and then stored on the bottom of the regeneration column 20.

A reboiler is fitted, as an external heating implement for heating the absorbing liquid positively by use of energy supplied from the outside, to the bottom of the regeneration column 20. Specifically, a steam heater 24 located outside the regeneration column 20, and a circulating path 25 for circulating, through the steam heater 24, a second absorbing liquid A2 stored on the column bottom are equipped. The second absorbing liquid A2 on the column bottom is partially branched through the circulating path 25 into the steam heater 24, and it is continuously heated by heat exchange with high-temperature steam to flow back into the column. In this manner, the second absorbing liquid A2 on the bottom is positively heated to discharge carbon dioxide sufficiently, and the filler 21a is also heated indirectly to promote the discharge of carbon dioxide by gas-liquid contact on the filler 21a. A high-temperature gas containing carbon dioxide and water vapor discharged from the second absorbing liquid rises to pass through the filler 21a in the first regenerating section 22a. Thereafter, it passes through the inner hole surrounded by the cylindrical wall of the partitioning member 23 to pass through the filler 21b in the second regenerating section 22b. During this period, the second absorbing liquid A2' flowing down through the filler 21a and the first absorbing liquid A1' flowing down through the filler 21b are heated so that carbon dioxide in the absorbing liquids A1' and A2' is discharged. The first absorbing liquid A1' supplied into the second regenerating section 22b does not receive any positive heating by the external heating implement, so as to be heated only by heat of gas discharged from the first regenerating section 22a. Thus the temperature thereof is lower than that of the second absorbing liquid A2'. Consequently, when the first and second absorbing liquids are identical with each other in composition, the regeneration degree of the first absorbing liquid A1 in the liquid reservoir of the partitioning member 23 becomes lower than that of the second absorbing liquid A2 on the column bottom, so as to become a semi-lean solution. The first absorbing liquid A1 from which carbon dioxide has been discharged is caused to flow back, by a pump 26, from the liquid reservoir of the partitioning member 23 to the upper region of the first absorbing section 12a of the absorption column 10 through a first return path 27 through which the center portion of the regeneration column 20 is connected to center portion of the absorption column 10. The second absorbing liquid A2 from which carbon dioxide has been sufficiently discharged (lean solution part) while being stored on the bottom of the regeneration column 20 is caused to flow back, by a pump 28, to the upper portion of the second absorbing section 12b of the absorption column 10 through the second return path 29 through which the upper portion of the absorption column 10 is connected to the bottom of the regeneration column 20. As a result, the first absorbing liquid A1, A1' are reciprocated between the first absorbing section 12a and the second regenerating section 22b through the first supplying path 15 and the first return path 27, so as to constitute a first circulation system. The second absorbing liquid A2, A2' are reciprocated between the second absorbing section 12b and the first regenerating section 22a through the second supplying path 17 and the second return path 29, so as to constitute a second circulation system. A carbon-dioxide-containing gas discharged from the absorbing liquid in the regeneration column 20 is discharged from the regeneration column 20 through the top thereof.

The first absorbing liquid A1, from which carbon dioxide has been discharged in the second regenerating section 22b, passes through a first heat exchanger 33 while flowing back in the first return path 27, so that heat exchange is performed between the first supplying path 15 and the first return path 27 in the first heat exchanger 33. Consequently, the first absorbing liquid A1 is cooled with the first absorbing liquid part A1' in the first supplying path 15, and further sufficiently cooled to a temperature suitable for the absorption of carbon dioxide by a cooler 35 using cooling water. Thereafter, the first absorbing liquid A1 is introduced into the upper portion of the first absorbing section 12a. Moreover, the second absorbing liquid A2, from which carbon dioxide has been discharged in the first regenerating section 22a, passes through a second heat exchanger 34 while flowing in the second return path 29, so that heat exchange is performed between the second supplying path 17 and the second return path 29 in the second heat exchanger 34. Consequently, the second absorbing liquid A2 is cooled with the second absorbing liquid A2' in the second supplying path 17, and further sufficiently cooled in the same manner by a cooler 36 using cooling water. Thereafter, the second absorbing liquid A2 is introduced into the upper portion of the second absorbing section 12b. Heat exchangers can be classified into various types such as spiral, plate, double-tube, multi-cylinder, circular multi-tube, eddy tube, eddy plate, tank coil, tank jacket, and direct contacting liquid types. Each of the first and second heat exchangers 33 and 34 used in the present invention may be any one of these types. From the viewpoint of the simplification of the exchangers and easiness of the disassembly and cleaning thereof, plate type exchangers are excellent.

A carbon-dioxide-containing gas discharged from the absorbing liquid by heating in the regeneration column 20 passes through a condensing section 37 at an upper portion of the regeneration column 20, and then discharged through an exhaust pipe 38 from the top thereof. The gas is sufficiently cooled by a cooler 39 using cooling water, so that water vapor and others contained therein are condensed as much as possible. The resultant condensed water is removed by a gas-liquid separator 40, and then recovered as a recovery gas C. The condensing section 37 condenses water vapor contained in the gas to restrain the discharge thereof, and further restrains the discharge of the absorbent. By injecting carbon dioxide contained in the recovery gas C into, for example, the earth or an oil well, carbon dioxide gas is possibly fixed in the earth and reorganized. The condensed water separated in the gas-liquid separator 40 is supplied at a predetermined flow rate through a flow path 42 into an upper portion of the condensing section 37 of the regeneration column 20 by a pump 41 so that the water functions as cooling water.

In the regeneration column 20, an expression of T1 > T2 is satisfied in which T1 represents the temperature of the second absorbing liquid A2 heated on the bottom of the first regenerating section 22a, and T2 represents the temperature of the second absorbing liquid A2' introduced from the second heat exchanger 34 into the upper portion of the first regenerating section 22a. Expressions of t1 > T3 > T4 and t1 > t2 are also satisfied in which T3 represents the temperature of the first absorbing liquid A1 in the liquid reservoir that has been heated in the second regenerating section 22b by the gas discharged from the first regenerating section 22a, T4 represents the temperature of the first absorbing liquid A1' introduced from the first heat exchanger 33 into the second regenerating section 22b, t1 represents the temperature of the gas discharged from the first regenerating section 22a into the second regenerating section 22b, and t2 represents the temperature of the gas discharged from the second regenerating section 22b. In general, the absorbing liquid in the regeneration column is heated to a temperature close to the boiling point of the absorbing liquid in order to heighten the regeneration degree thereof. When a heat exchanger being high in heat exchanging performance is used to heighten the recovery ratio of heat to make the temperature difference (T1 - T2) small, the temperature t1 of the gas discharged from the first regenerating section 22a also becomes high. If the gas is discharged from the regeneration column 20 as it is, a large quantity of energy corresponding to the latent heat is also discharged, together with water vapor, as well as energy corresponding to the sensible heat. In the present invention, the heat quantity of the gas discharged from the first regenerating section 22a is recovered in the second regenerating section 22b to be used for the regeneration of the absorbing liquid, so that the temperature of the gas is lowered from t1 to t2 to reduce the quantity of the discharge of the sensible heat to the outside. Following the lowering in the gas temperature, the condensation of water vapor also advances, so that the water vapor and latent heat contained in the gas discharged from the second regenerating section 22b are also decreased. In the above-mentioned structure, condensed water from water vapor vaporized from the absorbing liquid is, in the absorption column 10, supplied to the second absorbing liquid A2, A2' in the second absorbing section 12b while the condensed water is supplied, in the regeneration column 20, to the first absorbing liquid A1, A1' in the second regenerating section 22b. However, if the vaporized amount from the second absorbing liquid A2 in the first regenerating section 22a is more than the amount of the condensed water supplemented in the second absorbing section 12b, the structure may be changed so that the condensed water in the gas-liquid separator 40 is used as dilution water for restraining a rise in the concentration of the second absorbing liquid. In a case where the first and second absorbing liquids having the same composition are used, a part of the first absorbing liquid may be mixed into the second absorbing liquid or a part of the second absorbing liquid may be mixed into the first absorbing liquid part, in order to equalize the respective concentrations of the first and second absorbing liquids that are varied by vaporization. In this case, an energy loss caused by the partial mixing of the absorbing liquids can be reduced by adjusting conditions (such as the circulating quantity of the absorbing liquid) for the driving. It is appropriate to mix the absorbing liquids with each other while the driving conditions are adjusted so as to make the first absorbing liquid A1 after regenerated and the second absorbing liquid A2' after absorbing equivalent in the carbon dioxide concentration to each other.

When a heat exchanger high in heat exchanging performance is used as the second heat exchanger 34, in the second absorbing liquid part A2' (rich solution part) in the second supplying path 17 extended from the second heat exchanger 34 to the first regenerating section 22a, bubbles of carbon dioxide are easily generated by a rise in the temperature. Thus, a case may occur where the bubbles hinder the conduction of heat so that a decrease in the temperature difference (T1 - T2) is disturbed. In this case, the bubbles can be restrained by pouring the rich solution part into the second heat exchanger 34 in the state that the solution part is pressurized, so that the disturbance of the temperature rise of the rich solution part is cancelled. Consequently, the heat exchanging performance is projected onto the temperature difference between the heat exchanger inlet temperature of the lean solution part and the heat exchanger outlet temperature of the rich solution part, so that this temperature difference is reduced. Thus, thermal energy given by the heat exchanger is efficiently supplied into the regeneration stage. The above-described temperature difference at the heat exchange can be generally set to a temperature lower than 10°C, preferably about 3°C. In regard to the pressure applied to the absorbing liquid, it also works effective for promoting the discharge of carbon dioxide if it is released when the absorbing liquid part is charged into the regeneration treatment. For pouring the absorbing liquid into the second heat exchanger 34 in the state that the absorbing liquid is pressurized, for example, a back pressure valve is fitted onto the second supplying path 17 (for example, in the vicinity of an introduction port into the regenerating section 22a) between the second heat exchanger 34 and the regeneration column 20, whereby it is made possible to use the driving force of the pump 16 for pressurizing the absorbing liquid. In this case, the pressure can also be adjusted, using a pressure sensor. Similarly, it is also possible, for the absorbing liquid passing through the first heat exchanger 33, to restrain the bubbling by means of pressurization so that a rise in the temperature of the first absorbing liquid A1' supplied into the second regenerating section 22b can easily be attained. If the pressure of the absorbing liquid in the pressurized state is released when the absorbing liquid is introduced into the regeneration column, the discharge of carbon dioxide is promoted. At this time, latent heat is consumed to produce a further advantageous effect of contributing to a lowering in the temperature of the discharged gas.

The recovery method performed in the recovery apparatus 1 in Fig. 1 will be described.

In the absorption column 10, the gas G which contains carbon dioxide, such as a combustion exhaust gas or process exhaust gas, is supplied thereto through the bottom. The first and second absorbing liquids A1 and A2 are supplied to the first and second absorbing sections 12a and 12b, respectively, through the respective upper portions thereof. As a result, the gas G is brought into gas-liquid contact on the fillers 11a and 11b with the first and second absorbing liquids A1 and A2, so that carbon dioxide is absorbed into the absorbing liquids. Since carbon dioxide is satisfactorily absorbed at a low temperature, the liquid temperature of the absorbing liquids A1 and A2 or the temperature of the absorption column 10 (in particular, the fillers 11a and 11b) is generally adjusted to about 50°C or lower, preferably 40°C or lower. Since the absorbing liquids absorb carbon dioxide with generating heat, it is desired to pay attention to a matter that the liquid temperature should not be over 60°C, considering a rise in the liquid temperature by this heat generation. It is also appropriate, in regard to the gas G supplied into the absorption column 10, to use a cooling column to adjust the temperature thereof beforehand to an appropriate temperature, considering the above. For the first and second absorbing liquids A1 and A2, an aqueous liquid containing, as an absorbent, a compound having affinity with carbon dioxide is used, respectively. For the absorbent, alkanolamines, hindered amines having an alcoholic hydroxyl group, are selected, and specific examples thereof include monoethanolamine, diethanolamine, triethanolamine, N-methyldietanolamine (MDEA), diisopropanolamine, and diglycolamine, which belong to alkanolamines; and 2-amino-2-methyl-1-propanol (AMP), 2-(ethylamino)ethanol (EAE), and 2-(methylamino)ethanol (MAE), which belong to hindered amines each having an alcoholic hydroxyl group. It is allowed to combine two or more kinds of the compounds as mentioned above to use in a mixture form. The absorbent concentration in each of the absorbing liquids may be appropriately set in accordance with the quantity of carbon dioxide contained in the gas which is a target to be treated, and the treating speed, the fluidity of the absorbing liquid, a consumption loss restraint thereof, and others. The absorbent is generally used in a concentration of about 10 to 50% by mass. For treatment of the gas G in which the content by percentage of carbon dioxide is, for example, about 20%, an absorbing liquid having the concentration of about 30% by mass is favorably used.

In the present invention, the first and second absorbing liquids A1 and A2 are comprising respectively an amine absorbent of the same species in different concentrations, wherein the amine is selected from alkanolamines, and hindered amines having an alcoholic hydroxyl group. In this embodiment, when the absorbent concentration in the second absorbing liquid A2, which is relatively high in the temperature heated in the regeneration column 20, is set to be lower than that in the first absorbing liquid, the second absorbing liquid A2 can be restrained from thermal denaturation and be made high in heat resistance while the first absorbing liquid A1 can be made high in absorption capacity. Thus it becomes possible to select, among absorbents poor in heat resistance, an absorbent good in absorption performance and regeneration property (regeneration easiness) to use. When absorbing liquids are selected to be different in absorption species from each other (not part of the invention), since the first absorbing section 12a has a condition that the carbon dioxide concentration in a gas to be treated is higher than that in the second absorbing section 12b so that the absorption of carbon dioxide is easy, selection of the absorbing liquids is made by giving priority to regeneration property of the absorbing liquid for the first absorbing liquid A1, while giving priority to absorption performance for the second absorbing liquid A2 that is brought into contact in the second absorbing section 12b in which the carbon dioxide concentration in the gas is relatively low. In accordance with this construction, it is made possible to make easy the regeneration of the absorbing liquids without lowering the absorbing efficiency as a whole, so as to reduce the energy required for the regeneration. By using an absorbing liquid good in regeneration property as the first absorbing liquid A1, the regeneration degree thereof at low temperature in the second regenerating section 22b is made high, so that the absorbing liquid flowing back into the first absorbing section 12a can be brought near to a lean solution. Monoethanolamine (MEA), which is favorably usable in general, is an absorbent of high absorption performance while AMP and MDEA are good in regeneration property. In order to improve AMP or MDEA in absorption performance, an absorbing liquid is frequently prepared by blending MEA into them, and the absorption performance and the regeneration property can be adjusted to some degree in accordance with the blend ratio. Therefore, when the first and second absorbing liquids in the present invention are prepared using this method, it is possible to perform the absorption and the regeneration are efficiently while taking advantage of properties of each of the absorbing liquids. For example, it is preferred for reducing regeneration energy to use, as the first absorbing liquid A1, an absorbing liquid which is relatively high in concentration of MDEA or AMP and good in regeneration property and use, as the second absorbing liquid A2, an absorbing liquid which is relatively high in MEA concentration and high in absorption performance.

The supplying rate of the gas G, and the circulating rates of the first and second absorbing liquids are appropriately set, respectively, so that the absorption is advanced satisfactorily, in view of the amount of carbon dioxide contained in the gas G, the carbon dioxide absorption capacity of the absorbing liquids, the gas-liquid contact efficiency in the filler, and others. By circulating each of the absorbing liquids, an absorption treatment and a regeneration treatment are repeatedly performed.

The second absorbing liquid A2' in which carbon dioxide has been absorbed is supplied through the second supplying path 17 to the first regenerating section 22a. During this period, the second absorbing liquid A2' is subjected to heat exchange with the second absorbing liquid A2 flowing back from regeneration column 20, so as to be heated. The temperature T1 of the second absorbing liquid A2 heated by external heat in the first regenerating section 22a is varied in accordance with composition of the used absorbing liquid and regenerating conditions. The temperature T1 is generally set into the range of about 100 to 130°C (the boiling point or thereabout). On the basis of this, the heat exchanger outlet temperature of the second absorbing liquid A2', that is, the introduction temperature T2 thereof into the second regenerating section 22a can be set into the range of about 95 to 125°C. The temperature t1 of the gas discharged from the first regenerating section 22a to the second regenerating section 22b turns into the range of about 85 to 115°C. The temperature T3 of the first absorbing liquid A1 heated in the second regenerating section 22b by the gas discharged from the first regenerating section 22a turns into the range of about 85 to 115°C. The heat exchange in the first heat exchanger 33 makes it possible to set, into the range of about 80 to 110°C, the temperature T4 of the first absorbing liquid A1' introduced into the second regenerating section 22b. The temperature t2 of the gas discharged from the second regenerating section 22b is possibly lowered to 100°C or lower.

In the case of pressurizing at least one of the first and second absorbing liquids A1' and A2' flowing in the first and second heat exchangers 33 and 34, respectively, it is appropriate to render the pressure a constant pressure of 150 kPaG or more, preferably 200 kPaG or more, more preferably 250 kPaG or more (provided that the pressure is about 900 kPaG or less, in view of the pressure resistance of the apparatus and others).

The second absorbing liquid A2 stored in the bottom of the regeneration column 20 is heated to the boiling point or thereabout by partial circulation heating. At this time, the boiling point of the absorbing liquid depends on the composition (absorbent concentration) and the pressure in the regeneration column 20. For the heating, necessary is the supply of vaporization latent heat of water, which is lost from the absorbing liquid, and sensible heat of the absorbing liquid, and, if the vaporization is restrained by increasing the pressure, the sensible heat is increased by a rise in the boiling point. Therefore, in view of the balance between them, it is preferred for energy efficiency to use the condition setting that the pressure in the regeneration column 20 is increased to about 100 kPaG and the absorbing liquid is heated into the range of 120 to 130°C. The increase in the pressure in the regeneration column 20 is adjustable by fitting a pressure regulating valve to an outlet of the exhaust pipe 38 and controlling the pressure.

In the second regenerating section 22b, the regeneration is performed at a temperature lower than that of the first regenerating section 22a, thereby making it possible to lower the temperature t2 of the upper poriton of the regeneration column 20 to a temperature close to the temperature T4 of the poured first absorbing liquid A1' (t2 < t1, and T4 < T3 < t1). Consequently, the water vapor and the latent heat contained in the recovered gas passing through the condensing section 37 are decreased so that a loss of heat energy is reduced. In order to promote the regeneration of the absorbing liquid at a low temperature, it is important that the carbon dioxide content in the absorbing liquid is high. In this regard, the first absorbing liquid contacting the gas high in carbon dioxide concentration in the first absorbing section 12a easily becomes to have a relatively high content of carbon dioxide, and thus the first absorbing liquid is suitable for performing the regeneration with use of heat recovered in the second regenerating section 22b.

In this way, the first and second absorbing liquids A1 and A2 are circulated independently of each other between the absorption column 10 and the regeneration column 20, and the second regenerating section 22b for performing the regeneration at a lower temperature than that of the first regenerating section 22a is used to perform the regeneration treatment having two stages, thus improving the efficiency of energy in the regeneration column. It is also possible to regard the first and second absorbing liquids A1 and A2 that the first absorbing liquid A1 is an assistant absorbing liquid and the second absorbing liquid A2 is a main absorbing liquid. In this case, the function of the first absorbing liquid A1 includes the recovery and reuse of thermal energy in the regeneration column, as well as a decrease in absorption load which is given to the second absorbing liquid A2 by a gas of high carbon dioxide concentration. In short, the apparatus structure in Fig. 1 is also effective for raising the treatment adaptability of the recovery apparatus.

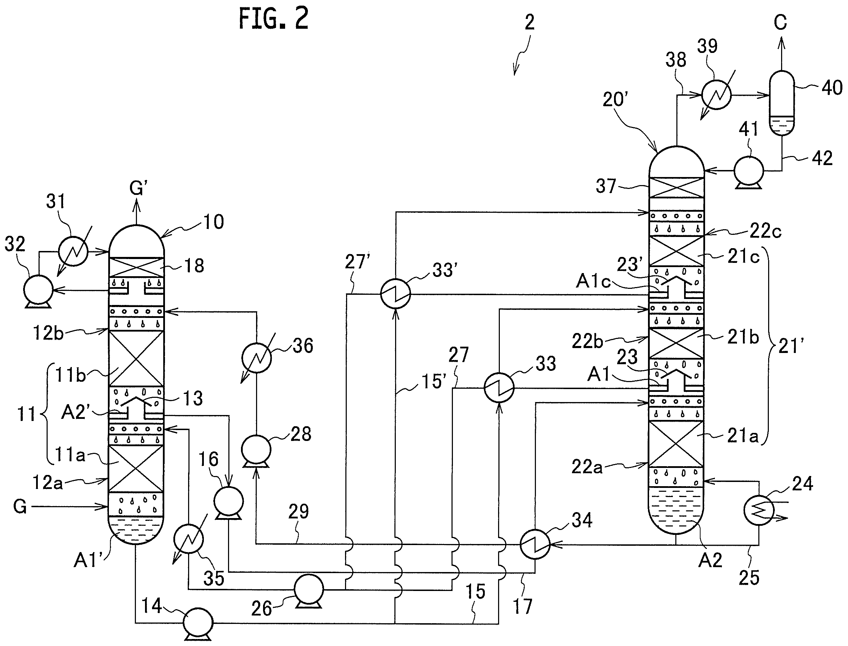

In a recovery apparatus having a conventional type of absorption column and regeneration column, an effect of the heat-exchanging efficiency of its heat exchanger is evaluated on the supposition that, in a simulating test for calculating regeneration energy required for the recovery of carbon dioxide, a 30% MEA solution in water is used as an absorbing liquid to treat a carbon-dioxide-containing gas into a carbon dioxide recovery ratio of 90%. In that case, when increasing the heat exchange performance (represented by a difference between the heat exchange inlet temperature of its return path and the heat exchange outlet temperature of its supplying path) of the heat exchanger from 10°C to 3°C, the rich solution introduction temperature of the regeneration column is raised by 7°C (the temperature is presumed to be 118°C) and the regeneration energy is lowered from about 4.1 GJ/t-CO₂ to about 3.9 GJ/t-CO₂ by decrease of a sensible heat required for the temperature rise. In order to evaluate the use of the structure of the present invention, an absorbing section and a regenerating section to be added for changing the recovery apparatus to the apparatus structure illustrated in Fig. 1 are provided to be rendered a first absorbing section and a second regenerating section, and another absorbing liquid of the same quality is circulated between the first absorbing section and the second regenerating section. In this structure, when the introduction temperature of the absorbing liquid into the second regenerating section is 106°C, which is 12°C lower than the temperature of the absorbing liquid introduced into the first regenerating section, the regeneration energy can be reduced to about 3.4 GJ/t-CO₂ by a contribution of a decreased quantity of the vaporization latent heat. Furthermore, the structure is changed to a recovery apparatus in Fig. 2, which will be detailed later, by dividing the inside of the regeneration column to three regenerating sections. In this case, when the temperature of the absorbing liquid introduced into the third regenerating section is about 98°C, the regeneration energy can be decreased to about 3.1 GJ/t-CO₂.

Fig. 2 is another embodiment of the use of the recovery apparatus for performing the carbon dioxide recovery method of the present invention. In a recovery apparatus 2, an absorption column 10 has two absorbing sections in the same manner as illustrated in Fig. 1. Its regeneration column 20' has three regenerating sections 22a, 22b and 22c which are filled with a filler 21', respectively. Between the second regenerating section 22b and the third regenerating section 22c, a partitioning member 23' is interposed which is the same structure as each of the above-mentioned partitioning members 13 and 23. A first absorbing liquid part A1' in which carbon dioxide has been absorbed in a first absorbing section 12a of the absorption column 10 is distributed and supplied into each of the second regenerating section 22b and the third regenerating section 22c of the regeneration column 20'. A gas discharged from the first regenerating section 22a passes through the second regenerating section 22b, subsequently passing through the partitioning member 23', and the gas is further brought into gas-liquid contact with the first absorbing liquid A1' also on the filler 21c in the third regenerating section 22c, so that the temperature of the discharged gas is made still lower than that according to the structure in Fig. 1. In order to distribute and supply, to the third regenerating section 22c, a portion of the first absorbing liquid A1' supplied from the bottom of the absorption column 10 into the regeneration column, a third supplying path 15' is provided which is branched from the first supplying path 15 to be connected to the third regenerating section 22c. In order to cause the absorbing liquid A1c stored in a liquid reservoir of the partitioning member 23' to flow back from the third regenerating section 22c into the first absorbing section 12a, a third return path 27' is provided which is extended from the third regenerating section 22c to be joined to a first return path 27. Furthermore, a third heat exchanger 33' is provided for performing heat exchange between the third supplying path 15' and the third return path 27'. The first absorbing liquid A1' passing through the third supplying path 15' is heated by heat exchange in the third heat exchanger 33', and then supplied into the third regenerating section 22c, thereby being subjected to gas-liquid contact in the third regenerating section 22c to discharge carbon dioxide. Thereafter, it is stored in the liquid reservoir of the partitioning member 23'. The absorbing liquid A1c in the liquid reservoir passes through the third return path 27' and it is subjected to heat exchange in the third heat exchanger 33' with the first absorbing liquid A1' in the third supplying path 15', thereby it is cooled. Thereafter, the absorbing liquid A1c is joined with the first absorbing liquid A1 in the first return path 27, and it is cooled by a cooler 35 and then flows back into the upper portion of the first absorbing section 12a of the absorption column 10.

In the regeneration column 20', expressions of t2 > T5 > T6, and t2 > t3 are satisfied in which: T5 represents the temperature of the first absorbing liquid A1c heated, in the third regenerating section 22c, by the gas discharged from the first and second regenerating sections 22a and 22b; T6 represents that of the first absorbing liquid part A1' introduced from the third heat exchanger 33' into the upper portion of the third regenerating section 22c; and t3 represents that of the gas discharged from the third regenerating section 22c. Consequently, if the temperatures of T1 to T4 and t1 and t2 of the recovery apparatus in Fig. 20 are equal to the corresponding temperatures T1 to T4 and t1 and t2 of the recovery apparatus 1 in Fig. 1, the temperature of the gas discharged from the regenerating section is lowered from t2 to t3 and the discharge of sensible heat to the outside is further restrained. At this time, water vapor is also condensed to attain a further decrease in the quantity of water vapor contained in the gas discharged from the third regenerating section 22c. Thus, the discharge of latent heat to the outside is also restrained. In short, the heat recovered in the third regenerating section 22c results in the regeneration so that recovery and utilization of heat further proceeds.

In regard to the recovery apparatus 2 in Fig. 2, others than the above-described matters are the same as those in the recovery apparatus 1 in Fig. 1. Thus, description thereof is omitted.

In the recovery apparatus 2 in Fig. 2, the temperature T5 of the first absorbing liquid A1c in the third regenerating section 22c is lower than the temperature T3 of the first absorbing liquid A1 in the second regenerating section 22b, and the first absorbing liquid A1c also becomes lower in regeneration degree. As a result, in the recovery apparatus 2 in Fig. 2, the regeneration degrees of the first absorbing liquid (A1 + A1c) flowing back to the first absorbing section 12a is averaged between two flows, so that the regeneration degree is made lower than that of the first absorbing liquid A1 in the recovery apparatus 1 in Fig. 1. As an embodiment for improving this matter given is an embodiment of dividing the absorption column 10 also into three absorbing sections to dispose the third absorbing section above the first and second absorbing sections, and reciprocating three kinds of absorbing liquids independently of one another through three circulating paths, respectively. Specifically, the first absorbing liquid is circulated between the first absorbing section and the third regenerating section; the second absorbing liquid is between the second absorbing section and the second regenerating section; and the third absorbing liquid is between the third absorbing section and the first regenerating section. A gas G containing carbon dioxide passes from the first absorbing section through the second absorbing section to reach the third absorbing section from which the gas is discharged to the outside. A carbon-dioxide-containing gas discharged, in the first regenerating section, by heat supplied from the outside passes through the second regenerating section to reach the third regenerating section from which the gas is discharged to the outside. It is appropriate to select the first, second and third absorbing liquids while importance is attached to regeneration property for the selection of the first and second absorbing liquids and importance is attached to the absorption performance for the third absorbent; and use, as the first absorbing liquid, one that has the best regeneration property among these absorbing liquids and use, as the third absorbing liquid part, one that has the best absorption performance among them. In the similar manner, the inside of the absorption column and that of the regeneration column may be divided into four or more absorbing sections, and four or more regenerating sections, respectively, to circulate a plural kinds of absorbing liquids.

### Industrial Applicability

The present invention is usable for a treatment or some other operation of carbon-dioxide-containing gas discharged from thermal power plants, ironworks, boilers and other facilities, and is useful for reducing the amount of discharged carbon dioxide from them, the effect thereof onto the environment, and others. The invention provides the use of a carbon dioxide recovery apparatus capable of reducing costs required for carbon dioxide collecting process, and contributing to energy saving and environmental protection.

## Claims

1. Use with a first absorbing liquid (A1, A1') and a second absorbing liquid (A2, A2') comprising respectively an amine absorbent of the same species in different concentrations, wherein the amine absorbent is selected from alkanolamines, and hindered amines having an alcoholic hydroxyl group, of a carbon dioxide recovery apparatus (1, 2), comprising:
an absorption column (10) configured to bring a gas (G) into contact with an absorbing liquid (A1, A2) and to allow the absorbing liquid to absorb carbon dioxide contained in the gas, the absorption column having a first absorbing section (12a) and a second absorbing section (12b) which are arranged to supply the gas through the first absorbing section into the second absorbing section;
a regeneration column (20, 20') that regenerate the absorbing liquid, configured to heat the absorbing liquid (A1', A2') having carbon dioxide absorbed in the absorption column to cause the absorbing liquid to release the carbon dioxide (C), the regeneration column having a first regenerating section (22a) having an external heating implement (24) and a second regenerating section (22b) arranged to be heated by heat from gas discharged from the first regenerating section; and
a circulation system having a first circulating path (15, 27) configured to circulate the absorbing liquid between the first absorbing section and the second regenerating section, and a second circulating path (17, 29) configured to circulate the absorbing liquid between the second absorbing section and the first regenerating section,
wherein the absorbing liquid circulated in the first circulating path is the first absorbing liquid (A1, A1') and the absorbing liquid circulated in the second circulating path is the second absorbing liquid (A2, A2'), and the concentration of the amine absorbent in the first absorbing liquid is higher than that in the second absorbing liquid.

2. The use of the carbon dioxide recovery apparatus according to claim 1, wherein the first circulating path and the second circulating path are independent from each other, and the second regenerating section has no external heating implement.

3. The use of the carbon dioxide recovery apparatus according to claim 1 or 2, wherein the circulation system has a first heat exchanger (33) and a second heat exchanger (34), the first heat exchanger is disposed to exchange, in the first circulating path, heat between the absorbing liquid supplied from the first absorbing section to the second regenerating section, and the absorbing liquid returned from the second regenerating section to the first absorbing section, and the second heat exchanger is disposed to exchange, in the second circulating path, heat between the absorbing liquid supplied from the second absorbing section to the first regenerating section, and the absorbing liquid returned from the first regenerating section to the second absorbing section.

4. The use of the carbon dioxide recovery apparatus according to any one of claims 1 to 3, wherein the temperature of the first absorbing liquid circulated in the first circulating path when the first absorbing liquid is supplied to the second regenerating section is lower than the temperature of the second absorbing liquid circulated in the second circulating path when the second absorbing liquid is supplied to the first regenerating section.

5. The use of the carbon dioxide recovery apparatus according to any one of claims 1 to 4, wherein the regeneration column further has a third regenerating section (22c) which is heated by heat from gas discharged from the second regenerating section, and the circulation system has a third circulating path (15', 27') configured to circulate the first absorbing liquid between the first absorbing section and the third regenerating section.

6. The use of the carbon dioxide recovery apparatus according to claim 5, wherein the third circulating path is arranged to be branched from the first circulating path.

7. A carbon dioxide recovery method, comprising:
an absorption treatment of bringing a gas (G) into contact with an absorbing liquid (A1, A2) to cause carbon dioxide contained in the gas to be absorbed into the absorbing liquid, the absorption treatment having a first absorbing step and a second absorbing step, and the gas being supplied through the first absorbing step to the second absorbing step;
a regeneration treatment of heating the absorbing liquid (A1', A2') in which carbon dioxide is absorbed in the absorption treatment to discharge carbon dioxide (C), thereby regenerating the absorbing liquid, the regeneration treatment having a first regenerating step and a second regenerating step, the absorbing liquid being heated in the first regenerating step with use of an external heating implement (24), and the absorbing liquid being heated in the second regenerating step with use of heat from the gas discharged in the first regenerating step; and
a first circulating step of circulating the absorbing liquid between the first absorbing step and the second regenerating step, and a second circulating step of circulating the absorbing liquid between the second absorbing step and the first regenerating step,
wherein the absorbing liquid circulated in the first circulating step is a first absorbing liquid (A1, A1'), the absorbing liquid circulated in the second circulating step is a second absorbing liquid (A2, A2'), the first absorbing liquid and the second absorbing liquid comprise respectively an amine absorbent of the same species in different concentrations, wherein the amine absorbent is selected from alkanolamines, and hindered amines having an alcoholic hydroxyl group, and the concentration of the amine absorbent in the first absorbing liquid circulated in the first circulating step is higher than the concentration in the second absorbing liquid circulated in the second circulating step.

## Patentansprüche

1. Verwendung eines Kohlendioxidrückgewinnungsgerätes (1, 2) mit einer ersten Absorptionsflüssigkeit (A1, A1') und einer zweiten Absorptionsflüssigkeit (A2, A2'), welche jeweils ein Amin-Absorbens derselben Spezies in unterschiedlichen Konzentrationen enthalten, wobei das Amin-Absorbens gewählt ist aus Alkanolaminen, und gehinderte Amine eine alkoholische Hydroxylgruppe aufweisen, wobei das Kohlendioxidrückgewinnungsgerät Folgendes beinhaltet:
eine Absorptionssäule (10), welche konfiguriert ist, um ein Gas (G) in Kontakt mit einer Absorptionsflüssigkeit (A1, A2) zu bringen und um die Absorptionsflüssigkeit in die Lage zu versetzen, in dem Gas enthaltenes Kohlendioxid zu absorbieren, wobei die Absorptionssäule einen ersten Absorptionsabschnitt (12a) und einen zweiten Absorptionsabschnitt (12b) aufweist, welche angeordnet sind, um das Gas durch den ersten Absorptionsabschnitt in den zweiten Absorptionsabschnitt zuzuführen;
eine Regenerationssäule (20, 20'), welche die Absorptionsflüssigkeit regeneriert, welche konfiguriert ist, um die Absorptionsflüssigkeit (A1', A2') zu erhitzen, welche Kohlendioxid, das in der Absorptionssäule absorbiert ist, aufweist, um die Absorptionsflüssigkeit dazu zu veranlassen, das Kohlendioxid (C) freizusetzen, wobei die Regenerationssäule einen ersten Regenerationsabschnitt (22a) aufweist, welcher ein äußeres Heizgerät (24) aufweist und einen zweiten Regenerationsabschnitt (22b), welcher angeordnet ist, um durch Wärme von aus dem ersten Regenerationsabschnitt abgelassenem Gas erhitzt zu werden; und
ein Umwälzsystem, welches einen ersten Umwälzungsweg (15, 27) aufweist, welcher konfiguriert ist, um die Absorptionsflüssigkeit zwischen dem ersten Absorptionsabschnitt und dem zweiten Regenerationsabschnitt umzuwälzen, und einen zweiten Umwälzungsweg (17, 29), welcher konfiguriert ist, um die Absorptionsflüssigkeit zwischen dem zweiten Absorptionsabschnitt und dem ersten Regenerationsabschnitt umzuwälzen,
wobei die in dem ersten Umwälzungsweg umgewälzte Absorptionsflüssigkeit die erste Absorptionsflüssigkeit (A1, A1') ist und die in dem zweiten Umwälzungsweg umgewälzte Absorptionsflüssigkeit die zweite Absorptionsflüssigkeit (A2, A2') ist, und wobei die Konzentration an Amin-Absorbens in der ersten Absorptionsflüssigkeit höher als diejenige in der zweiten Absorptionsflüssigkeit ist.

2. Verwendung des Kohlendioxidrückgewinnungsgerätes nach Anspruch 1, bei welchem der erste Umwälzungsweg und der zweite Umwälzungsweg unabhängig voneinander sind, und der zweite Regenerationsabschnitt kein äußeres Heizgerät hat.

3. Verwendung des Kohlendioxidrückgewinnungsgerätes nach Anspruch 1 oder 2, bei welchem das Umwälzsystem einen ersten Wärmetauscher (33) und einen zweiten Wärmetauscher (34) aufweist, wobei der erste Wärmetauscher in dem ersten Umwälzungsweg angeordnet ist zum Wärmetauschen zwischen der Absorptionsflüssigkeit, welche durch den ersten Absorptionsabschnitt an den zweiten Regenerationsabschnitt zugeführt wurde, und der Absorptionsflüssigkeit, welche vom zweiten Regenerationsabschnitt an den ersten Regenerationsabschnitt zurückgeführt wird, und wobei der zweite Wärmetauscher in dem zweiten Umwälzungsweg angeordnet ist zum Wärmetauschen zwischen der vom zweiten Absorptionsabschnitt an den ersten Regenerationsabschnitt zugeführten Absorptionsflüssigkeit und der vom ersten Regenerationsabschnitt an den zweiten Absorptionsabschnitt zurückgeführten Absorptionsflüssigkeit.

4. Verwendung des Kohlendioxidrückgewinnungsgerätes nach einem der Ansprüche 1 bis 3, bei welchem die Temperatur der ersten Absorptionsflüssigkeit, welche in dem ersten Umwälzungsweg umgewälzt wird, wenn die erste Absorptionsflüssigkeit an den zweiten Regenerationsabschnitt zugeführt wird, geringer ist als die Temperatur der zweiten Absorptionsflüssigkeit, welche in dem zweiten Umwälzungsweg umgewälzt wird, wenn die zweite Absorptionsflüssigkeit an den ersten Regenerationsabschnitt zugeführt wird.

5. Verwendung des Kohlendioxidrückgewinnungsgerätes nach einem der Ansprüche 1 bis 4, bei welchem die Regenerationssäule zudem einen dritten Regenerationsabschnitt (22c) aufweist, welcher durch Wärme von aus dem zweiten Regenerationsabschnitt abgelassenem Gas erhitzt wird, und das Umwälzungssystem einen dritten Umwälzungsweg (15', 27') aufweist, welcher konfiguriert ist, um die erste Absorptionsflüssigkeit zwischen dem ersten Absorptionsabschnitt und dem dritten Regenerationsabschnitt umzuwälzen.

6. Verwendung des Kohlendioxidrückgewinnungsgerätes nach Anspruch 5, bei welchem der dritte Umwälzungsweg angeordnet ist, um von dem ersten Umwälzungsweg abgezweigt zu werden.

7. Kohlendioxid-Rückgewinnungsverfahren, Folgendes beinhaltend:
eine Absorptionsbehandlung des Inkontaktbringens eines Gases (G) mit einer Absorptionsflüssigkeit (A1, A2) um in dem Gas enthaltenes Kohlendioxid dazu zu veranlassen, in der Absorptionsflüssigkeit absorbiert zu werden, wobei die Absorptionsbehandlung einen ersten Absorptionsschritt und einem zweiten Absorptionsschritt aufweist, und wobei das Gas durch den ersten Absorptionsschritt an den zweiten Absorptionsschritt zugeführt wird;
eine Regenerationsbehandlung des Erhitzens der Absorptionsflüssigkeit (A1', A2'), in welcher Kohlendioxid in der Absorptionsbehandlung absorbiert wurde, zum Ablassen von Kohlendioxid (C), wodurch die Absorptionsflüssigkeit regeneriert wird, wobei die Regenerationsbehandlung einen ersten Regenerationsschritt und einen zweiten Regenerationsschritt aufweist, wobei die Absorptionsflüssigkeit in dem ersten Regenerationsschritt unter Verwendung eines äußeren Heizgerätes (24) erhitzt wird, und die Absorptionsflüssigkeit in dem zweiten Regenerationsschritt unter Verwendung von Wärme von in dem ersten Regenerationsschritt abgelassenem Gas erhitzt wird; und
einen ersten Umwälzungsschritt des Umwälzens der Absorptionsflüssigkeit zwischen dem ersten Absorptionsschritt und dem zweiten Regenerationsschritt, und einen zweiten Umwälzungsschritt des Umwälzens der Absorptionsflüssigkeit zwischen dem zweiten Absorptionsschritt und dem ersten Regenerationsschritt,
wobei die in dem ersten Umwälzungsschritt umgewälzte Absorptionsflüssigkeit eine erste Absorptionsflüssigkeit (A1, A1') ist, die in dem zweiten Umwälzungsschritt umgewälzte Absorptionsflüssigkeit eine zweite Absorptionsflüssigkeit (A2, A2') ist, wobei die erste Absorptionsflüssigkeit und die zweite Absorptionsflüssigkeit jeweils ein Amin-Absorbens derselben Spezies in unterschiedlichen Konzentrationen enthalten, wobei das Amin-Absorbens gewählt ist aus Alkanolaminen und gehinderte Amine eine alkoholische Hydroxylgruppe aufweisen, und die Konzentration an Amin-Absorbens in der ersten in dem ersten Umwälzungsschritt umgewälzten Absorptionsflüssigkeit höher als die Konzentration in der zweiten in dem zweiten Umwälzungsschritt umgewälzten Absorptionsflüssigkeit ist.

## Revendications

1. Utilisation d'un appareil de récupération de dioxyde de carbone (1, 2) avec un premier liquide absorbant (A1, A1') et un second liquide absorbant (A2, A2') comprenant respectivement un absorbant amine de la même espèce en des concentrations différentes, dans laquelle l'absorbant amine est sélectionné parmi des alcanolamines, et des amines encombrées présentant un groupe hydroxyle alcoolique, dans laquelle l'appareil de récupération de dioxyde de carbone comprend :
une colonne d'absorption (10) configurée pour amener un gaz (G) en contact avec un liquide absorbant (A1, A2) et pour permettre au liquide absorbant d'absorber du dioxyde de carbone contenu dans le gaz, la colonne d'absorption présentant une première section absorbante (12a) et une seconde section absorbante (12b) qui sont agencées pour alimenter le gaz à travers la première section absorbante jusque dans la seconde section absorbante ;
une colonne de régénération (20, 20') qui régénère le liquide absorbant, configurée pour chauffer le liquide absorbant (A1', A2') présentant du dioxyde de carbone absorbé dans la colonne d'absorption pour amener le liquide absorbant à libérer le dioxyde de carbone (C), la colonne de régénération présentant une première section régénérante (22a) présentant un équipement de chauffage externe (24) et une deuxième section régénérante (22b) agencée pour être chauffée par de la chaleur provenant du gaz évacué à partir de la première section régénérante ; et
un système de circulation présentant un premier trajet de circulation (15, 27) configuré pour faire circuler le liquide absorbant entre la première section absorbante et la deuxième section régénérante, et un deuxième trajet de circulation (17, 29) configuré pour faire circuler le liquide absorbant entre la seconde section absorbante et la première section régénérante,
dans laquelle le liquide absorbant mis en circulation dans le premier trajet de circulation est le premier liquide absorbant (A1, A1'), et le liquide absorbant mis en circulation dans le deuxième trajet de circulation est le second liquide absorbant (A2, A2'), et la concentration de l'absorbant amine dans le premier liquide absorbant est supérieure à celle dans le second liquide absorbant.

2. Utilisation de l'appareil de récupération de dioxyde de carbone selon la revendication 1, dans laquelle le premier trajet de circulation et le deuxième trajet de circulation sont indépendants l'un de l'autre, et la deuxième section régénérante n'a pas d'équipement de chauffage externe.

3. Utilisation de l'appareil de récupération de dioxyde de carbone selon la revendication 1 ou 2, dans laquelle le système de circulation présente un premier échangeur de chaleur (33) et un second échangeur de chaleur (34), le premier échangeur de chaleur est disposé pour échanger, dans le premier trajet de circulation, de la chaleur entre le liquide absorbant alimenté de la première section absorbante vers la deuxième section régénérante et le liquide absorbant renvoyé de la deuxième section régénérante vers la première section absorbante, et le second échangeur de chaleur est disposé pour échanger, dans le deuxième trajet de circulation, de la chaleur entre le liquide absorbant alimenté de la seconde section absorbante vers la première section régénérante, et le liquide absorbant renvoyé de la première section régénérante vers la seconde section absorbante.

4. Utilisation de l'appareil de récupération de dioxyde de carbone selon l'une quelconque des revendications 1 à 3, dans laquelle la température du premier liquide absorbant mis en circulation dans le premier trajet de circulation lorsque le liquide absorbant est alimenté vers la deuxième section régénérante est inférieure à la température du second liquide absorbant mis en circulation dans le deuxième trajet de circulation lorsque le second liquide absorbant est alimenté vers la première section régénérante.

5. Utilisation de l'appareil de récupération de dioxyde de carbone selon l'une quelconque des revendications 1 à 4, dans laquelle la colonne de régénération présente en outre une troisième section régénérante (22c) qui est chauffé par de la chaleur provenant du gaz évacué de la deuxième section régénérante, et le système de circulation présente un troisième trajet de circulation (15', 27') configuré pour faire circuler le premier liquide absorbant entre la première section absorbante et la troisième section régénérante.

6. Utilisation de l'appareil de récupération de dioxyde de carbone selon la revendication 5, dans laquelle le troisième trajet de circulation est agencé pour être ramifié à partir du premier trajet de circulation.

7. Procédé de récupération de dioxyde de carbone, comprenant :
un traitement d'absorption consistant à amener un gaz (G) en contact avec un liquide absorbant (A1, A2) pour amener du dioxyde de carbone contenu dans le gaz à être absorbé dans le liquide absorbant, le traitement d'absorption présentant une première étape d'absorption et une seconde étape d'absorption, et le gaz étant alimenté à travers la première étape d'absorption et la seconde étape d'absorption ;
un traitement de régénération consistant à chauffer le liquide absorbant (A1', A2') dans lequel du dioxyde de carbone est absorbé durant le traitement d'absorption pour évacuer du dioxyde de carbone (C), en régénérant ainsi le liquide absorbant, le traitement de régénération présentant une première étape de régénération et une seconde étape de régénération, le liquide absorbant étant chauffé dans la première étape de régénération en utilisant un équipement de chauffage externe (24), et le liquide absorbant étant chauffé dans la seconde étape de régénération en utilisant de la chaleur provenant du gaz évacué lors de la première étape de régénération ; et
une première étape de circulation consistant à faire circuler le liquide absorbant entre la première étape d'absorption et la seconde étape de régénération, et une seconde étape de circulation consistant à faire circuler le liquide absorbant entre la seconde étape d'absorption est la première étape de régénération,
dans lequel le liquide absorbant mis en circulation dans la première étape de circulation est un premier liquide absorbant (A1, A1'), le liquide absorbant mis en circulation dans la seconde étape de circulation est un second liquide absorbant (A2, A2'), le premier liquide absorbant et le second liquide absorbant comprennent respectivement un absorbant amine de la même espèce en des concentrations différentes, dans lequel l'absorbant amine est sélectionné parmi des alcanolamines, et des amines encombrées présentant un groupe hydroxyle alcoolique, et la concentration de l'absorbant amine dans le premier liquide absorbant mis en circulation dans la première étape de circulation est supérieure à la concentration dans le second liquide absorbant mis en circulation dans la seconde étape de circulation.
